# EUROPEAN PATENT SPECIFICATION

(11) **EP 4 159 600 B1**
(45) Date of publication and mention of the grant of the patent: **07.08.2024**
(21) Application number: 22197673.1
(22) Date of filing: 26.09.2022
(51) Int. Cl.: B62D 55/26, B60F 3/00, B60P 3/10

(54) **AMPHIBIOUS EQUIPMENT FOR HANDLING LARGE-SIZED OBJECTS**
AMPHIBIENAUSRÜSTUNG ZUR HANDHABUNG VON GROSSEN OBJEKTEN
ÉQUIPEMENT AMPHIBIE POUR MANIPULER DES OBJETS DE GRANDE TAILLE

(30) Priority: 29.09.2021 IT 202100024965; 29.09.2021 IT 202100024953
(43) Date of publication of application: 05.04.2023
(73) Proprietor: DACHI s.r.l., 12051 Alba (CN) (IT)
(72) Inventor: MARINO, Ferruccio, 12051 ALBA (CN) (IT)
(74) Representative: Robba, Pierpaolo

(56) References cited:
- WO-A1-03/089268
- WO-A1-2011/146010
- WO-A1-99/54165
- IT-A1- TO20 120 814

## Description

### Technical Field

The present invention relates to an amphibious equipment for handling large-sized objects, such as, for example, boats, beams, posts and the like. Particularly, though not exclusively, the invention relates to an equipment capable of being used for transferring, launching and hauling boats. Even more particularly, the present invention relates to an equipment allowing handling of boats also at locations in which partial submersion of the equipment is required.

### Background Art

Equipments are known intended for transporting large-sized objects of various kinds and comprising a frame equipped with longitudinal beams extending longitudinally and carrying accessories for supporting the object to be transported and a centralized drive unit. These equipments are provided with suspensions that can be either idle or self-propelled, the latter being usually provided with hydraulic-type motors.

A specific use of these equipments relates to the transportation, launching and hauling of boats. Below, reference will be made to a type of equipment intended for this application. The invention, however, can also be used in other fields, for transporting large-sized objects of essentially any type.

The known equipments may further be provided, in association with suspensions, with levelling assemblies capable of lifting and lowering, with respect to the ground, the frame of the equipment on which the boat rests, so as to keep the desired attitude, as well as with steering assemblies, capable of suitably steering the wheels of the suspensions.

Examples of equipments of the above-mentioned type are described in ITTO20120814 and ITTO20110871 e EP3560755(A1).

One of the problems encountered in the making of an amphibious equipment for handling, launching and hauling boats results from the need to prevent some parts of the equipment from coming into contact with water. In particular, the centralized drive unit, which usually is of the endothermic type, will have to be appropriately arranged on the frame of the equipment, in order to prevent water from penetrating there where moving mechanical members operate.

According to prior art, drive units of the endothermic type are arranged at a high height on the frame and, moreover, they are provided with ducts, known as snorkels, for sucking air and discharging exhaust gases into the atmosphere at a height higher than the maximum level reached by water while the equipment is in operation.

With the spread of electric and hybrid propulsion, i.e., a propulsion in which an endothermic unit cooperates with an electric unit, the above problem became even more apparent, the electric motor typically being even less suitable for being submerged than the thermal one. This problem is traditionally solved by resorting to amphibious equipments, which, though capable of operating also when partially submerged, are not particularly suitable for being handled out of water. Therefore, this solution has the drawback of requiring transfer of the boat onto another equipment more suitable for out-of-water transportation, when the distance to be travelled on the road is not short.

Another problem of known equipments of the amphibious type consists in that they are usually expensive and complex to manufacture, because, on one hand, they reach a usually high submersion capacity, this, however, requiring sophisticated means such as watertight seals and use of specific apparatuses capable of working under submersion.

A further problem encountered in the making of an equipment of the amphibious type for handling large-sized objects results from the need to operate in narrow places, at least partially submerged in water and even with objects of very different dimensions. According to prior art, the suspensions currently used in amphibious equipments have a substantially upturned "T"-shaped structure and are equipped with paired wheels in which a wheel hub is arranged at the center of the axle of the suspension in order to support a pair of wheels located at the opposite ends of the axle.

This configuration, however, is expensive to manufacture and maintain and it also causes an increase in the lateral space requirement, both inside the space defined between the longitudinal beams for receiving the transported object and outside the frame of the equipment.

At present, the need is therefore particularly felt for making available a compact amphibious equipment for transferring large-sized objects that lends itself to transporting loads of even very different size.

A first object of the invention is thus to provide a solution to the problem of how to make an equipment for handling, launching and hauling boats amphibious, so as to allow use thereof both outside and in water.

Another object of the invention is to provide an equipment of the aforementioned type that is especially suitable for electric or hybrid propulsion.

A further object of the invention is therefore to provide an amphibious equipment that is simple and inexpensive to manufacture and thus lends itself to large-scale industrial manufacturing.

A still further object of the invention is to provide an amphibious equipment that is compact and suitable for transporting loads of different size and shape and lends itself to all the steps of handling such loads (including, for example, the hauling and launching steps), thus preventing the need to transfer a load from an equipment to another equipment between one step and another step of handling.

These and other objects are achieved with an amphibious equipment for handling, launching and hauling boats in accordance with the appended claims.

### Summary of the Invention

The amphibious equipment for handling large-sized objects (and particularly for handling, launching and hauling boats) according to a preferred embodiment of the invention mainly comprises a frame and a plurality of suspensions associated with the frame and provided each with at least one wheel for moving the equipment with respect to the ground. The suspensions of the equipment may be either fixed relative to the frame or steering by means of hydraulic, or possibly electric, steering assemblies, and they may further comprise hydraulic, or possibly electric, lifting assemblies, for leveling the plane of the frame with respect to the ground on which the equipment operates.

The wheels associated with the suspensions of the equipment may either be mounted on idle hubs or be motor-driven and take motion from a hydraulic-type or electric-type motor, preferably housed in the hub of the suspension.

A centralized circuit, of the hydraulic-type or electric-type depending on the type of user devices employed, performs the function of distributing pressurized oil and electricity to the various user devices. Said user devices will be, mainly, the hydraulic or electric motors associated with the motor-driven suspensions, and the hydraulic or electric cylinders actuating the steering assemblies and lifting assemblies.

A centralized power supply unit, comprising an endothermic, electric, or hybrid drive unit, when the user devices are of the hydraulic type, or an electric battery, when the user devices are of the electric type, is provided for generating the power required by the user devices. The centralized power supply unit is therefore associated with a corresponding hydraulic or electric circuit, in order to transport the necessary power upon request by the user devices, which, as anticipated above, are mainly the motors of the wheels and the actuators of the steering assemblies and hydraulic lifting assemblies.

The frame of the equipment preferably consists of a pair of longitudinal beams arranged parallel to each other and spaced from each other so as to receive therebetween the hull of a boat, and one or more transverse beams, possibly removable, whose purpose is to hold the two longitudinal beams firmly together.

In other embodiments, the frame may be made with any number, even an odd number, of longitudinal beams, or also starting from a monolithic piece extending substantially rectilinearly.

Furthermore, the suspensions are usually provided associated with the longitudinal beams and preferably in a number which is the same for each longitudinal beam. The suspensions will also preferably be organized so that a first pair of suspensions is located at a first end of the frame, and a second pair of suspensions is located at a second end of the frame opposite to the first end.

Advantageously, according to the invention, the centralized power supply unit is housed in a first housing, or container, comprising a watertight inner box open on top, which in turn is housed in a watertight outer box open on bottom. In other words, according to the invention, the housing is a double-box housing and is essentially defined by a pair of opposed boxes which may have the same geometrical shape or also different geometrical shapes, provided that said shapes are compatible with each other for being housed one inside the other. Still according to the invention, said boxes are associated with the frame of the equipment and define therebetween a gap, mainly intended for the passage of tubing of the hydraulic or electric circuit supplying the various user devices.

Preferably, according to the invention, the gap at least partially surrounds the inner box and, more preferably, the gap entirely surrounds said inner box, whereby the two boxes are essentially spaced from each other by the gap at all points.

The inner box is provided with a closed lower base and a closed side wall, and the outer box is provided with a closed upper base and a closed side wall. The inner box further comprises an open upper base, and the outer box comprises an open lower base.

The centralized power supply unit, especially when this is a unit of the endothermic or hybrid type, will usually be provided with an auxiliary battery, for example for starting the endothermic engine.

According to the invention, said auxiliary battery is preferably housed in the same double-box housing in which the power supply unit is housed. More preferably, said auxiliary battery is housed in a second double-box housing, substantially identical to the first housing in which the power supply unit is housed.

When the power supply unit is an electric motor, or when the user devices, which are mainly the motors of the wheels and the actuators of the steering assemblies and lifting assemblies, are mainly of the electric type, the equipment will advantageously be provided with a primary battery or a set of primary batteries, preferably housed in a housing, or arranged in several housings, preferably of the double-box type.

According to the invention, the housing preferably comprises a second box extending around the first box at least over the entire height of the first box. In addition, the inner and outer boxes are spaced from each other at their top, so that the closed base of the second box is not in contact with the open base of the first box.

Advantageously, thanks to this arrangement of the two boxes defining the housing, it is possible to prevent water from penetrating into the first box when the equipment is partially submerged for carrying out the operations of transporting, launching and hauling a boat. The simplicity of realization of the double-box housing further makes it possible to make a particularly simple amphibious equipment, suitable also for transportation on dry terrain, without having to transfer the boat onto a more suitable equipment.

According to a preferred embodiment of the invention, said gap defined between the pairs of boxes of the housing houses a double-gooseneck duct for the passage of the tubing of a hydraulic circuit and, where required, of the cables of an electric circuit.

More particularly, the duct comprises a first gooseneck defined about the open upper edge of the side wall of the inner box, and a second gooseneck defined about the open lower edge of the side wall of the outer box, whereby the first gooseneck opens into the inner box and the second gooseneck opens outside the outer box. The double-gooseneck duct will advantageously be watertight and provided solely with openings at its opposite ends. Preferably, the first gooseneck extends inside the inner box over at least 20% of the depth of said box, and the second gooseneck emerges from the outer box over at least 20% of the height of said outer box.

According to a first embodiment, the double-gooseneck duct may have a cross-section, for example with a rectangular shape, having a size enough to house a plurality of tubes of a hydraulic circuit or a plurality of cables of an electric circuit. In this case, the double-gooseneck duct essentially serves as a guide for said tubes and does not come into contact with the hydraulic oil supplying the various user devices of the equipment.

In another embodiment, the duct may have a reduced cross-section, for example with a circular shape, and house a corresponding single tube of a hydraulic circuit. In this case, a plurality of ducts may be provided, arranged preferably in parallel and identical with one another, i.e., essentially a bank of ducts, for the passage of corresponding tubes of the hydraulic circuit and for carrying oil. In this case, too, the double-gooseneck duct essentially serves only as a guide for said duct and does not come into contact with the hydraulic oil supplying the various user devices of the equipment. According to this embodiment of the invention, double-gooseneck ducts will be provided at least in a number corresponding to the number of tubes of the hydraulic circuit coming from the housing for the power supply unit that have to be guided out of the boxes and towards the various user devices.

In still another embodiment, the duct may form an integral part of the hydraulic circuit, whereby the oil comes directly into contact with the inner walls of the double-gooseneck duct. According to this embodiment of the invention, there will preferably be provided a number of double-gooseneck ducts corresponding to the number of branches of the hydraulic circuit that come from the housing and are directed towards the various user devices of the equipment.

One or more double-gooseneck ducts may also be provided for the passage of the electric cables supplying the power supply unit, especially when an auxiliary supply battery is housed in a second housing separate from the first housing.

According to a preferred embodiment of the invention, the boxes have a quadrilateral or circular cross-section, whereby the corresponding housing has a parallelepiped or cylindrical shape. However, still according to the invention, it is also provided that the housings may essentially have any shape, for example, a cylindrical or parallelepiped shape, and with greater extension on the horizontal or vertical plane, according to the arrangement of the various units inside the housing.

Accordingly, the boxes of the first housing and the boxes of the second housing will have a corresponding and preferably identical shape. However, embodiments may be provided in which the boxes have different shapes from each other, for example, a cylindrical inner box may be housed in a parallelepiped outer housing.

According to a preferred embodiment of the invention, the housing is rigidly attached to the frame of the equipment by means of brackets preferably arranged between the outer box and the frame. In this embodiment, the inner box is in turn attached to the corresponding outer box by means of similar brackets. Thus, in this embodiment, the inner box is rigidly attached to the outer box and the outer box is rigidly attached to the frame by means of brackets.

In other embodiments, however, it may provided that both boxes, the inner one and the outer one, of at least one of the housings, are attached directly to the frame, with or without providing further fixing brackets between one box and the other one. Thus, according to this embodiment, both boxes may be suspended from the frame and preferably spaced from each other at all points.

The housing may advantageously be rigidly attached to one of the ends of a corresponding longitudinal beam, so as to be substantially arranged as a continuation or longitudinal extension of said longitudinal beam.

Still according to the invention, the first housing preferably houses the hydraulic distribution unit, where provided, associated with the hydraulic circuit for distributing power to the hydraulic motors and to the other user devices of the equipment, such as steering assemblies and lifting assemblies of the suspensions.

According to another embodiment of the invention, the housing is hinged by means of hinges to either of the ends of corresponding longitudinal beam so as to be able to switch from a front configuration, in which the housing is substantially aligned with the longitudinal axis of one of the longitudinal beams of the frame, to a side configuration, in which the housing is substantially adjacent to a side, preferably the outer side, of one of the longitudinal beams of the frame.

Advantageously, according to this embodiment of the invention, the equipment can take a compact configuration in length, or in width, to adapt to different conditions of transportation of boats.

Locking brackets are preferably provided to lock the housing when it is in at least one of said configurations, to prevent undesired rotation of the housing about the hinges.

In another embodiment, it is possible to provide for automated rotation, for example, by means of a hydraulic or electric actuator, of the housing about the hinges that connect it to the frame. According to this embodiment of the invention, the locking brackets can be omitted.

Advantageously, the equipment according to the invention may further comprise, where required, an adjustable, preferably telescopically retractable, hydraulic or electric support assembly, for supporting the hull of a boat with respect to the frame. More preferably, according to this aspect of the invention, the equipment will be provided with at least two such support assemblies, one for each longitudinal beam, said support assemblies being arranged specularly with respect to a vertical middle plane longitudinally passing through the frame of the equipment.

Sai hydraulic support assembly is preferably at least partially housed inside a corresponding longitudinal beam, in an appropriate seat open at both ends. Even more preferably, the support assembly comprises a hydraulic or electric actuator rigidly attached or tilting under the corresponding longitudinal beam and passing through the longitudinal beam through said seat. Furthermore, the actuator bears, at its upper free end, a plate coated with a layer of deformable elastic material, for example a pad made of a synthetic rubber, capable of leaning against the hull of a boat, without damaging the surface of the hull.

According to the invention, the hydraulic actuator is preferably connected to the centralized hydraulic circuit of the equipment and is driven by the oil pressure distributed in the circuit of the pump accommodated in the housing.

According to a preferred embodiment of the invention, the amphibious equipment for transferring large-sized objects is provided with suspensions which are structured so as to comprise mainly a suspension assembly capable of varying the height extension of the suspension, a single rotating hub associated in a cantilevered manner to said suspension assembly and equipped with a single wheel, and a rotation gear ring fixed to the upper end of the suspension assembly and arranged to be rotatably associated with a frame of an equipment for transferring large-sized objects.

According to this embodiment of the invention, the suspension as a whole takes an essentially "C"-shaped configuration.

Still according to this embodiment of the invention, the suspension assembly preferably comprises a pair of telescopic actuators, for example, a pair of hydraulic or electric telescopic cylinders, extending each about their respective parallel longitudinal axes.

Still according to this embodiment of the invention, the hub is arranged in cantilevered manner with respect to both said actuators, which are therefore located both adjacent to the same flank of the single wheel with which the suspension assembly is provided, this allowing an advantageous reduction in width space requirement.

Preferably, the rotation axis of the hub is perpendicular to the plan on which said longitudinal extension axes of the cylinders of the suspension assembly lie.

Still referring to this embodiment of the invention, the rotation axis of the rotation gear ring falls within the center of the footprint left on the ground by the wheel and further intersects, preferably, the rotation axis of the hub. In this way, advantageously, the suspension assembly is particularly balanced and rigid even if it is provided with a single wheel, which makes it particularly compact and little space-requiring with respect to the prior art configurations equipped with pairs of wheels symmetrical to the cylinders of the suspension assembly.

The rotation axis of the rotation gear ring is preferably approximately parallel to the longitudinal extension axes of the cylinders of the suspension assembly.

Preferably, the suspension assembly further comprises a plate which is fixed to the upper ends of the hydraulic cylinders and to which the rotation gear ring is attached. The plate preferably extends in a cantilevered manner parallelly to the rotation axis of the hub and on the same side as the suspension assembly in which said hub is arranged.

Preferably, the gear ring is attached to the cantilevered part of said plate and said gear ring is rotatable preferably relative to a flange fixed to the frame of the equipment and provided with an appendix defining a corresponding fixing arm for a guide member in which a toothed rack of the steering assembly slides. The toothed rack is engaged on the toothed crown of the gear ring and is capable of causing rotation of the gear ring about the rotation axis thereof, when it is subjected to a force, for example, generated by a hydraulic or electric actuator, with a longitudinal component substantially parallel to the axis of the toothed rack. The actuators of the suspension assembly preferably comprise a liner and a stem extendable relative to the liner, and, preferably, the hub is associated in a cantilevered manner to the pair of liners of the hydraulic cylinders essentially in the middle between said liners. Still referring to this configuration, the rotation gear ring is fixed to the ends of the stems, whereby, under operating conditions of the suspension, the liners are arranged in a low position adjacent to the wheel, and the stems are arranged in a high position adjacent to the rotation gear ring, so as to make the space requirement for the suspension compact and reduced. In this way, advantageously, a substantially inverted configuration of said hydraulic cylinders is obtained.

The hub is rigidly attached to the suspension assembly and, in particular, to the actuators, i.e., it is not tilting relative to the suspension assembly and, in particular to the pair of actuators of the suspension assembly. The single-wheel configuration, without tilting or oscillation of the hub, is advantageously more simple and robust with respect to known solutions comprising paired wheels, in which the axis of the gear ring is parallel to and in the same plane in which the axes of the actuators of the suspension lie. The geometrical configuration of the suspension, in fact, provides that the rotation axis of the gear ring and the axes of the actuators extend on different planes. In particular, the axis of the rotation gear ring is substantially parallel to a plane passing through the axes of the actuators. Thus, according to this embodiment of the invention, the suspension defines an essentially "C"-shaped configuration in which the gear ring and the hub extend in parallel starting from the plane on which the axes of the actuators of the suspension assembly lie. Therefore, a bending moment is created on the actuators of the suspension assembly, said bending moment being compensated for by the rigid connection between the hub and said suspension assembly.

### Brief Description of the Drawings

The description of some preferred embodiments of the invention will be provided below by way of non-limiting example with reference to the annexed drawings, in which:
- Fig. 1 is a perspective view of an amphibious equipment for handling, launching and hauling boats according to a preferred embodiment of the invention;
- Fig. 2 is a sectional view taken along a longitudinal vertical plane of a housing;
- Fig. 3A is a top plan view of the equipment in a second embodiment of the invention, in which the housing is shown in two operating configurations;
- Fig. 3B is an enlarged view of a detail of Fig.3A in which the housing is represented in the configuration aligned with the corresponding longitudinal beam;
- Figs. 4A and 4B are enlarged views of a detail of the equipment of Fig. 1, concerning a suspension of said equipment;
- Fig. 5 is an enlarged front view of a further detail of the equipment of Fig. 1, concerning a hydraulic support assembly of said equipment.

### Detailed Description of Preferred Embodiments of the Invention

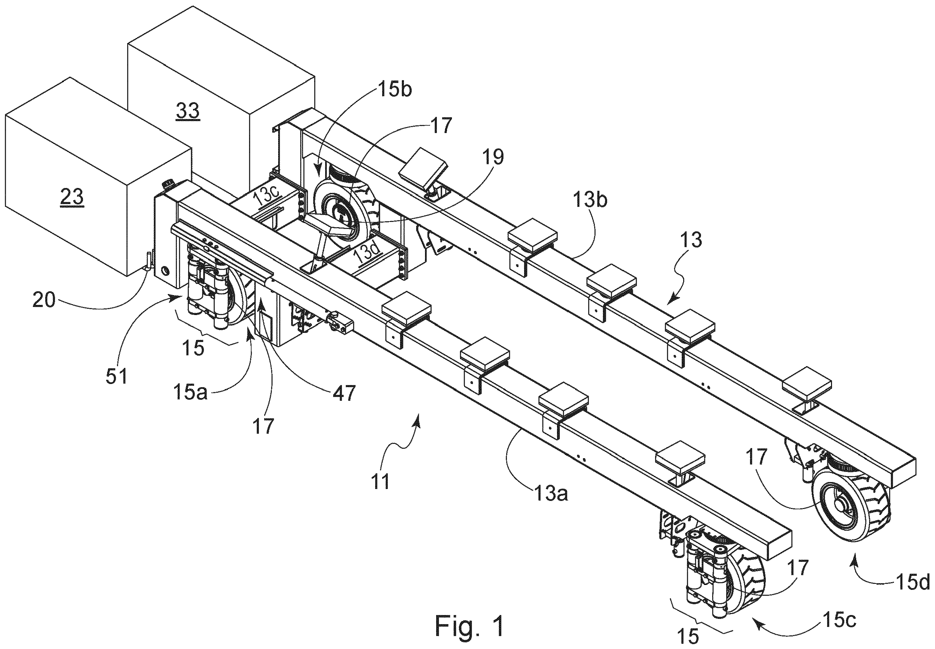

Referring to Fig. 1, this shows an amphibious equipment for handling, launching and hauling boats according to a preferred embodiment of the invention. In all the figures, the amphibious equipment has been indicated as a whole with reference numeral 11.

The equipment 11 mainly comprises a frame 13, a plurality of suspensions 15 having each at least one wheel 17 and associated to the frame 13 to handle the equipment 11 with respect to the ground. A pair 15a, 15b of said suspensions 15 is provided with a corresponding motor 19, which can be, for example, of the hydraulic or electric type, to cause rotation of the corresponding wheel 17, whereas a second pair of suspensions 15c,15d comprises an idle wheel 17.

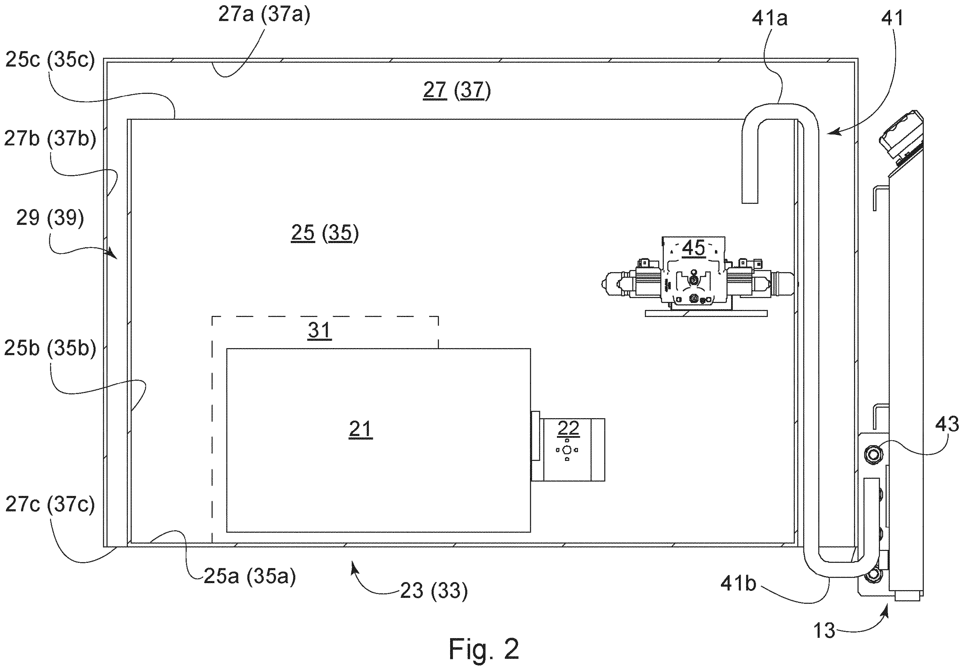

Referring also to Fig. 2, the equipment 11 further comprises a power supply unit 21, which may comprise, for example, a centralized endothermic, electric, or hybrid drive unit associated with a hydraulic pump 22, or a battery, for transferring to said motors 19, through a circuit 20, hydraulic or electric, respectively, the power necessary to move the equipment 11.

The frame 13, in the shown embodiment, comprises a pair of longitudinal beams 13a,13b arranged parallel to each other and spaced from each other so as to receive therebetween the hull of a boat, and a pair of transverse beams 13c,13d. The suspensions 15a,15b provided with motor-driven wheels 17 are arranged between the two transverse beams 13a,13b near a first end of the longitudinal beams and the suspensions provided with idle wheels 17 are arranged at the opposite end of said longitudinal beams.

In the shown embodiment, the suspensions 15a,15b are also steering by means of an appropriate actuator, whereas the suspensions 15c,15d may be idle or rigidly attached to the longitudinal beams 13a,13b.

Referring in particular to Fig. 2, the centralized power supply drive unit 21 is advantageously housed, according to the invention, in a first housing 23 comprising a watertight inner box 25 open on top, which in turn is housed in a watertight outer box 27 open on bottom. Still according to the invention, said boxes 25,27 are associated with the frame 13 of the equipment 11 and define therebetween a gap 29, mainly intended for the passage of said hydraulic or electric circuit 20 and at least partially surrounding the inner box 25.

The inner box 25 is provided with a closed lower base 25a and a closed side wall 25b, and the outer box 27 is provided with a closed upper base 27a and a closed side wall 27b. The inner box 25 further comprises an open upper base 25c, and the outer box 27 comprises an open lower base 27c.

The power supply unit 21 comprising a centralized endothermic, electric or hybrid drive unit is electrically associated with a dedicated electric circuit (not shown) for a battery 31, indicated as a whole with a dashed line in the Figure.

The battery 31 can advantageously be housed, depending on its size and the available space, either in the first housing 23 or in a second housing 33 essentially identical to the first housing 23, though possibly having a different size, said second housing 25, too, comprising a watertight inner box 25 open on top, which in turn is housed in a watertight outer box 37 open on bottom.

Similarly to the first housing 23, in which the power supply unit 21 is housed, the boxes 35,37 of the second housing 33 for the battery are also associated with the frame 13 of the equipment and define therebetween a gap 39 surrounding at least partially surrounding the inner box 35 for the passage of the cables of said dedicated electric circuit.

The inner box 35 is provided with a closed lower base 35a and a close side wall 35b, and the outer box 37 is provided with a closed upper base 37a and a closed side wall 37b. The inner box 35 further comprises an open upper base 35c, and the outer box 37 comprises an open lower base 37c.

Both housings 23,33 comprise a second box 27,37 extending around the first box 25,35 at least over the entire height of the first box 25,35, and, in addition, in both housings the inner box 25,35 and the outer box 27,37 are spaced from each other at their top, so that the closed base 27a,37a of the second box 27,37 is not in contact with the open base 25d,35d of the first box 25,35.

Thanks to this arrangement, it is possible to prevent water from entering the first box 25,35 when the equipment 11 is partially or entirely submerged for carrying out the operations of transporting, launching and hauling a boat.

According to a preferred embodiment of the invention, said gap 29 of the first housing and possibly also the gap 39 of the second housing, houses a double-gooseneck duct 41 for the passage of said hydraulic, and possibly electric, circuit 20.

More particularly, the duct 41 comprises a first gooseneck 41a defined about the open upper edge of the side wall 25b,35b of the inner box 25,35 and a second gooseneck 41b defined about the open lower edge of the side wall 27b,37b of the outer box 27,37, whereby the first gooseneck 41a opens inside the inner box 25,35 and the second gooseneck 41b opens outside the outer box 27,37.

The double-gooseneck duct 41 may have, for example, a rectangular cross-section and house a plurality of tubes or cables of the hydraulic or electric circuit 20. In other embodiments, the duct 41 may have a circular cross-section and house a corresponding tube or cable of the hydraulic or electric circuit 20, or the duct 41 may form an integral part of the hydraulic circuit 20, whereby the oil comes directly into contact with the inner walls of the double-gooseneck duct 41.

As an alternative, a plurality of ducts 41 may be provided, arranged preferably in parallel and identical with one another, i.e., essentially a bank of ducts 41, for the passage of corresponding tubes or cables of the hydraulic circuit and for carrying oil and electricity, respectively. One or more double-gooseneck ducts 41may further be provided for the passage of the electric cables supplying the power supply unit 21 when this is of the endothermic, or hybrid, or electric type, especially when the battery is housed in the second housing 33.

The boxes 25,27 and 35,37 preferably have a quadrilateral cross-section or a circular cross-section with vertical axis, whereby the corresponding housing 23,33 has a parallelepiped or cylindrical shape. However, the housings 23,33 may essentially have any shape, for example, a cylindrical or parallelepiped shape, and, in the shown embodiment, have a parallelepiped shape with greater extension on the horizontal plane. Correspondingly, the boxes 25,27 of the first housing 23 and the boxes 35,37 of the second housing 33 will have a corresponding and preferably identical shape. However, embodiments are possible in which the boxes have different shapes from each other, for example, a cylindrical inner housing can be housed in a parallelepiped outer box.

According to this preferred embodiment of the invention, the housing 23 that houses the power supply unit 21 and the housing 33 that houses the battery supplying said unit 21 are rigidly attached to the frame 13 of the equipment 11 by means of brackets 43 preferably arranged between the outer box 23,37 and the frame 13, whereas the inner box 25,35 in turn is attached to the corresponding outer box by means of similar brackets. In this embodiment, the housing 23 and the housing 33 are rigidly attached to one of the ends of a corresponding longitudinal beam 13a,13b, so as to substantially appear as a longitudinal continuation of said longitudinal beam.

The first housing 23 further houses a hydraulic distribution unit 45, where provided, associated with the hydraulic circuit 20 for distributing power to the hydraulic motors and to the other user devices of the equipment, such as steering assemblies 47 and lifting assemblies 51 of the suspensions 15.

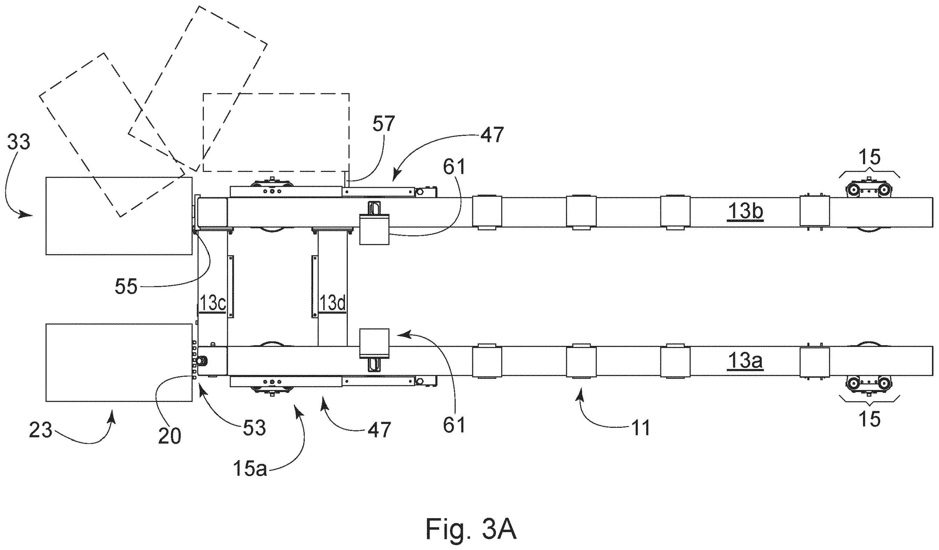

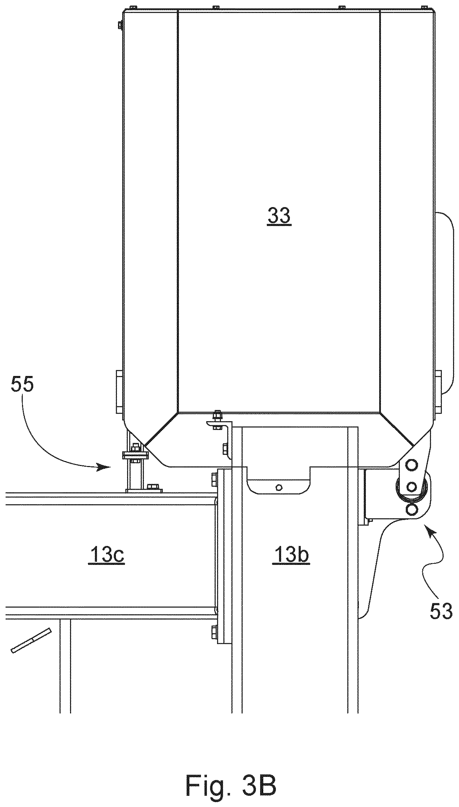

Referring to Figs. 3A and 3B, these show a second embodiment of the invention, in which the housing 23 and the housing 33 are hinged by means of hinges 53 to one of the ends of a corresponding longitudinal beam 13a,13b, so as to be able to switch from a front configuration, in which the housing 23,33 is substantially aligned with the longitudinal axis of one of the longitudinal beams of the frame 13, to a side configuration, in which the housing 23,33 is substantially adjacent to a flank of one of the longitudinal beams of the frame 13.

Locking brackets 55 are provided attached to the outermost transverse beam 13c on the opposite side of the hinges 53 to lock, for example, by means of bolts, the housings 23,33 when said housings are in the configuration aligned with the longitudinal axis of the longitudinal beams.

Locking brackets 57 are provided attached laterally to the corresponding longitudinal beam 13b,13c to lock, for example, by means of bolts, the housings 23,33 when said housings are in the laterally rotated configuration.

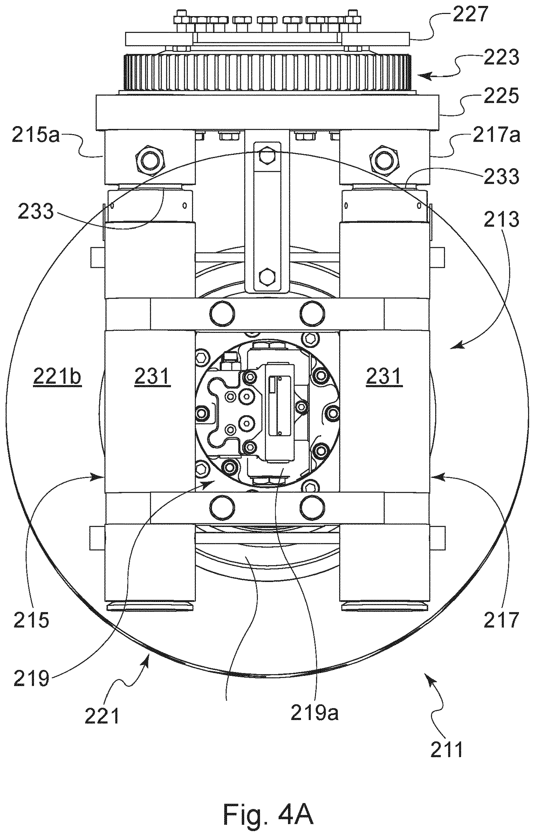

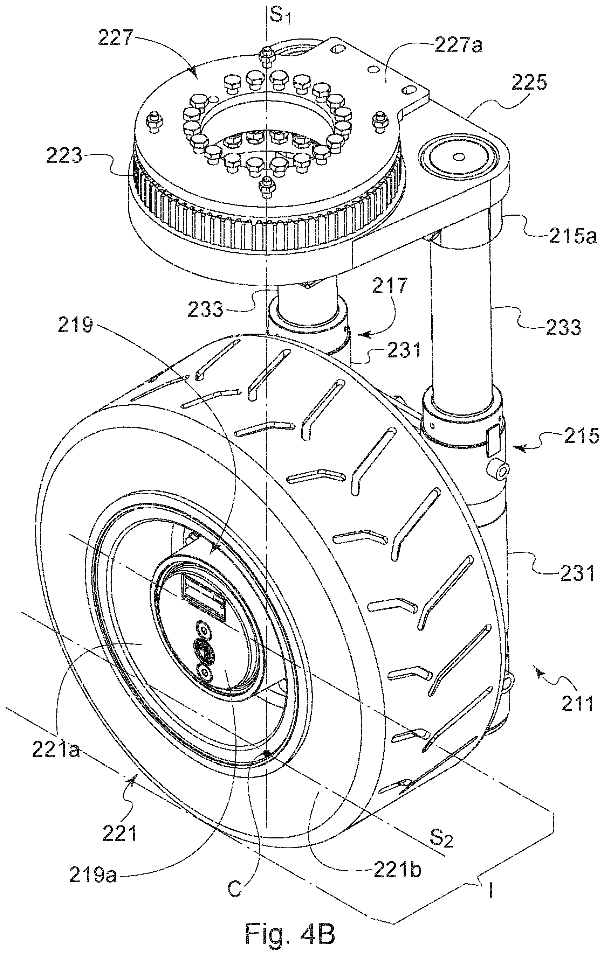

Turning now to Figs. 4A and 4B, these show in detail a suspension 211 for an equipment of the type of the equipment 11 of Fig. 1 for transferring boats or other large-sized objects. The suspension 211 mainly comprises a suspension assembly 213 capable of varying the height extension of the suspension 211 and, accordingly, of the equipment with which said suspension 211 is associated.

The suspension assembly 213 comprises a pair of hydraulic telescopic cylinders 215,217 arranged with their longitudinal axes parallel to each other. As will be more apparent from the following description, said telescopic cylinders 215,217, when the suspension 211 is in operation, are arranged with their longitudinal axes substantially parallel to the ground on which the equipment associated with the suspension 211 operates.

The suspension 211 further comprises a rotating hub 219 arranged between the hydraulic telescopic cylinders 215,217 and extending laterally in a cantilevered manner with respect to the suspension assembly 213.

The hub 219 can be of the motor-driven type or it can be an idle hub and is provided with a single wheel 211 comprising, preferably, a wheel rim 211a made of steel and a tire 221b.

A rotation gear ring 223 is arranged fixed to the upper end 215a,217a of the suspension assembly 213 and, as will be more apparent from the following description, is arranged to be rotatably associated with a frame of an equipment for transferring boats, for being rotated about an axis S1.

As anticipated above, the hub 219 can be of the motor-driven type and accordingly, in this case, it incorporates a motor 219a which can be, for example, of the hydraulic or electric type. In the first case, i.e., that of the hydraulic motor, the suspension 211 will advantageously be provided with hydraulic ducts intended for hydraulic power transmission to the hydraulic motor and connectable to the hydraulic circuit of the equipment with which the suspension 213 is associated. In the second case, i.e., that of the electric motor, the suspension 211 will advantageously be provided with electric cables connectable to the electric circuit of the equipment with which the suspension 213 is associated. In both cases, the suspension 213 will be provided with hydraulic ducts intended for hydraulic power transmission to the hydraulic cylinders 215,217 and associatable with the hydraulic circuit of the equipment with which the suspension 213 is associated.

In the shown embodiment, the rotation axis of the hub 219 is perpendicular to a plane parallel to said longitudinal extension axes of the cylinders 215,217 of the suspension assembly 213.

Still referring to the shown embodiment, the rotation axis S1 of the rotation gear ring 223 falls within the center C of the footprint I, left, on the ground T on which the wheel 221 advances, by the tire 221b. Furthermore, in this embodiment, the axis S1 intersects the rotation axis of the hub 219 and is approximately parallel to the longitudinal extension axes of the cylinders 215,217 of the suspension assembly 213. In this way, advantageously, the suspension assembly 213 is particularly balanced and rigid even if it is provided with a single wheel 221 associated with the hub 219.

The hub 219 is rigidly associated with the suspension assembly 214 and, in particular, to the cylinders 215,217, i.e., the hub 219 is not tilting relative to the suspension assembly 213 and, in particular, to the pair of cylinders of the suspension assembly. The rotation axis of the gear ring 223 and the axes of the hydraulic cylinders 215,217 extend on different planes. In particular, the axis of the rotation gear ring 223 is substantially parallel to a plane passing through the axes of the hydraulic cylinders 215,217. Therefore, the suspension advantageously defines an essentially "C"-shaped configuration, in which the gear ring 223 and the hub 219 extend parallel to each other starting from the plane on which the axes of the hydraulic cylinders 215,217 of the suspension assembly 213 lie. Therefore, a bending moment is created on the cylinders 215,217 of the suspension assembly 213, said bending moment being compensated for by the rigid connection between the hub 219 and said suspension assembly. The suspension assembly 213 further comprises a plate 225 which is fixed to the upper ends 215a,217a of the hydraulic cylinders 215,217 and to which the rotation gear ring 223 is attached. The plate 225 extends in a cantilevered manner parallelly to the rotation axis of the hub 219 and on the same side as the suspension assembly 213 in which said hub 219 is arranged.

In the shown embodiment, the gear ring 223 is attached to the cantilevered part of said plate 225 and said gear ring 223 is rotatable relative to a flange 227 rigidly attached to the frame 13. The flange is provided with an appendix 227a defining a corresponding arm capable of accommodating a guide member for a sliding toothed rack (not shown) engaged on the toothed crown of the toothed rack and capable of causing rotation of the gear ring 223 about the rotation axis thereof, when the toothed rack is subjected to a force with a longitudinal component substantially parallel to the axis of the toothed rack.

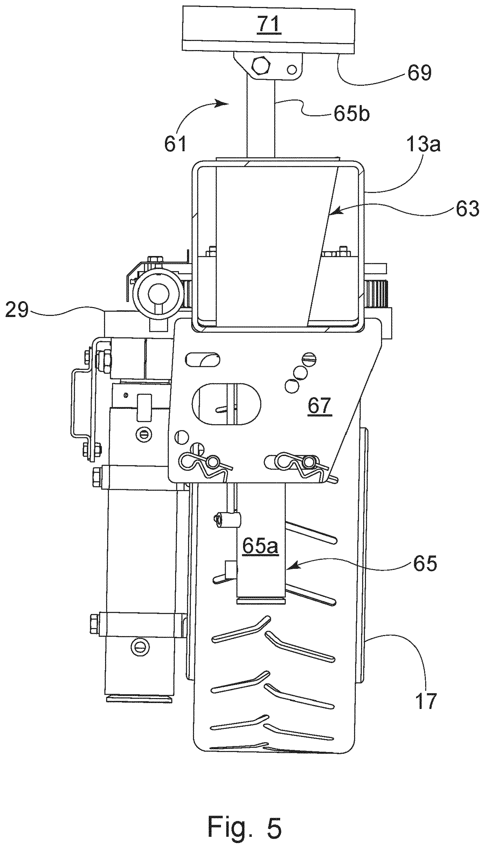

The telescopic cylinders 215,217 of the suspension assembly 213 comprise a liner 213 and a stem 233 extendable relative to the liner 231, and, according to the preferred embodiment shown, the hub 219 is associated in a cantilevered manner with the pair of liners 231 of the hydraulic cylinders 215,217. Still referring to this configuration, the rotation gear ring 223 is fixed to the ends 215a,217a of the stems 233, whereby, under operating conditions of the suspension 211, the liners 231 are arranged in a low position adjacent to the wheel 221, and the stems 223 are arranged in a high position adjacent to the rotation gear ring 223. Referring to Fig. 5, this illustrates an adjustable, telescopically retractable, hydraulic support assembly 61, for supporting the hull of a boat.

Said hydraulic support assembly 61 is partially housed within a corresponding longitudinal beam 13a,13b in an appropriate well-shaped seat 63 open at both the upper and lower ends. More precisely, the assembly 61 comprises a hydraulic cylinder 65 provided with a liner 65a and adjustably fixed relative to a pair of plates 67 welded beneath the corresponding longitudinal beam 13a,13b at the lower opening of the seat 63. The stem 65b of the hydraulic cylinder 65 has, at its free end, a plate 69 hinged thereto and coated with a layer 71 of elastic material, for example, a pad made of a synthetic rubber, capable of leaning against the hull of a boat, without damaging the surface of the hull.

According to the invention, the hydraulic cylinder 65 is connected to the centralized hydraulic circuit 20 of the equipment 11 and is driven by the oil pressure distributed in the circuit of the pump 22 accommodated in the housing 23.

The invention as described and illustrated is susceptible of numerous variations and modifications falling within the scope of the appended claims.

## Claims

1. Amphibious equipment (11) for handling large-sized objects, in particular for handling, launching and hauling boats, comprising a frame (13), a plurality of suspensions (15) provided each with at least one wheel (17) and associated with the frame (13) in order to handle the equipment (11), at least a pair of said suspensions (15) being provided with a corresponding motor (19), a centralized power supply unit (21,31) for transferring to said motors (19), through a circuit (20), the power required for handling the equipment (11), **characterized in that** said centralized power unit (21,31) is housed in a first housing (23,33) comprising a watertight inner box (25,35) open on top, which in turn is housed in a watertight outer box (27,37) open on bottom, and **in that** said boxes (25,35,27,37) are associated with the frame (13) of the equipment (11) and define therebetween a gap (29,39) at least partially surrounding the inner box (25,35) and intended for the passage of said circuit (20).

2. Equipment according to claim 1, wherein said motor (19) comprises a hydraulic motor, said centralized power supply unit (21,31) comprises an endothermic, electric or hybrid drive unit associated with a hydraulic pump (22), and said circuit comprises a hydraulic circuit, or wherein said motor (19) comprises an electric motor, said centralized power supply unit (21,31) comprises an electric battery and said circuit (20) comprises an electric circuit.

3. Equipment according to claim 1 or 2, wherein the inner box (25,35) is provided with a closed lower base (25a,35a) and a closed side wall (25b,35b), and wherein the outer box (27,37) is provided with a closed upper base (27a,37a) and a closed side wall (27b, 37b), and wherein the inner box (25,35) comprises an open upper base (25c,35c) and the outer box (27,37) comprises an open lower base (27c,37c).

4. Equipment according to claim 1 or 2 or 3, wherein said centralized power supply unit (21) is electrically fed through an electric circuit by a battery (31), and wherein said battery is housed in a second housing (23,33), also comprising a watertight inner box (25,35) open on top, which in turn is housed in a watertight outer box (27,37) open on bottom.

5. Equipment according to claim 1 or 2 or 3 or 4, wherein said boxes (25,35,27,37) are associated with the frame (13) of the equipment (11) and define therebetween a gap (29,39) at least partially surrounding the inner box (25,35) and intended for the passage of tubing of said electric circuit (20).

6. Equipment according to claim 4 or 5, wherein said gap (29,39) defined between the boxes houses a double-gooseneck duct (41) for the passage of said hydraulic and/or electric circuit, and wherein a first gooseneck (41a) of said duct (41) is defined about the open upper edge of the side wall (25b,35b) of the inner box (25,35) and a second gooseneck (41b) of said duct (41) is defined about the open lower edge of the side wall (27b,37b) of the outer box (27,37), whereby the first gooseneck (41a) opens into the inner box (25,35) and the second gooseneck (41b) opens outside the outer box (27,37).

7. Equipment according to any of the preceding claims, wherein the housing (23,33) housing the centralized power supply unit (21) is hinged to the frame (13) of the equipment so that it can shift from a front configuration, in which the housing (23,33) is substantially aligned with the longitudinal axis of the frame (13), to a side configuration, in which the housing is substantially adjacent to a side of the frame (13).

8. Equipment according to any of the preceding claims, wherein the first housing (23,33) further houses a hydraulic distribution unit (45) associated with the hydraulic circuit (20) for distributing power to the hydraulic motors (19) and to the other user devices of the equipment (11), such as steering assemblies (47) and lifting assemblies (51) of the suspensions (15).

9. Equipment according to any of the preceding claims, wherein the inner box (25,35) is attached to the outer box (27,37), and wherein the outer box (27,37) is attached to the frame (13), possibly with the interposition of hinges, or both the inner and outer boxes (25,35,27,37) are attached to the frame (13).

10. Equipment according to any of the preceding claims, wherein one or more of said suspensions comprise:
- a suspension assembly (213) arranged to vary the height extension of the suspension and comprising a pair of telescopic actuators (215,217) extending each about their respective parallel longitudinal axes;
- a single rotating hub (219), either idle or motor-driven, rigidly associated in a cantilevered manner with said suspension assembly (213) and equipped with a single wheel (221);
- a rotation gear ring (223) fixed to the upper end of the suspension assembly and arranged to be rotatably associated with a frame (13) of an equipment for transferring large-sized objects.

11. Equipment according to claim 10, wherein the rotation axis (S1) of the rotation gear ring (223) falls within the center (C) of the footprint (I), left, on the ground (T) on which the wheel (221) advances, by the tire (221b) with which said wheel (221) is equipped.

12. Equipment according to claim 10 or 11, wherein the rotation axis of the rotation gear ring (223) intersects the rotation axis of the hub (219) and is approximately parallel to the longitudinal extension axes of the cylinders (215,217) of the suspension assembly (213).

13. Equipment according to claim 10, wherein the actuators of the suspension assembly (213) comprise corresponding hydraulic cylinders, wherein the suspension assembly comprises a plate (225) fixed to the upper ends of the stems of the hydraulic cylinders (215,217) and extending in a cantilevered manner in parallel to the rotation axis of the hub (219) and on the same side of the suspension assembly (213) on which the hub is located, and wherein said gear ring (223) is attached to said plate (225), a toothed rack being provided for causing rotation of the gear ring (223) about its own axis (S1).

14. Equipment according to claim 10, wherein the actuators of the suspension assembly (213) comprise corresponding hydraulic cylinders, and wherein the telescopic hydraulic cylinders (215,217) of the suspension assembly (213) comprise a liner (231) and a stem (233) extendable from the liner, and wherein the hub (219) is associated in a cantilevered manner with the pair of liners of the hydraulic cylinders and the gear ring is fixed to the upper ends of the stems, whereby, under operating conditions of the suspension, the liners (213) are arranged in a low position adjacent to the wheel (221) and the stems (233) are arranged in a high position adjacent to the gear ring (223).

15. Equipment according to any of the preceding claims, wherein the frame (13) comprises longitudinal beams (13a,13b), and wherein there is provided an adjustable retractable support assembly (61) intended for supporting the large-sized object, for example a boat hull, and partially housed within a corresponding longitudinal beam (13a,13b) in a well-shaped seat (63) open at both its upper and lower ends.

## Patentansprüche

1. Amphibienausrüstung (11) zur Handhabung von großen Objekten, insbesondere zum Handhaben, vom Stapel Lassen und Transportieren von Booten, mit einem Rahmen (13), mehreren Aufhängungen (15), die jeweils mit wenigstens einem Rad (17) versehen und dem Rahmen (13) zugeordnet sind, um die Ausrüstungen zu handhaben, wobei wenigstens ein Paar der Aufhängungen (15) mit einem entsprechenden Motor (19) und einer zentralen Leistungsversorgungseinheit (21, 31) zum Versorgen dieser Motoren über einen Schaltkreis (20) mit der zum Handhaben der Ausrüstung (11) benötigten Leistung versehen ist, **dadurch gekennzeichnet, dass** die zentrale Leistungsversorgungseinheit (21, 31) in einem ersten Gehäuse (23, 33) angeordnet ist, das eine wasserdichte innere Box (25, 35) aufweist, die an ihrer Oberseite offen ist, und wiederum in einer wasserdichten äußeren Box (27, 37) angeordnet ist, die an einer Unterseite offen ist, und dass diese Boxen (25, 35, 27, 37) dem Rahmen (13) der Ausrüstung (11) zugeordnet sind und dazwischen eine Lücke (29, 39) definieren, die zumindest teilweise die innere Box (25, 35) umgibt und für den Durchgang des Schaltkreises (20) vorgesehen ist.

2. Ausrüstung nach Anspruch 1, wobei der Motor (19) einen Hydraulikmotor aufweist, die zentrale Leistungsversorgungseinheit (21, 31) eine endotherme, elektrische oder hybride Antriebseinheit aufweist, die einer Hydraulikpumpe (22) zugeordnet ist, und der Schaltkreis ein Hydraulikkreis aufweist, oder wobei der Motor (19) einen Elektromotor aufweist, die zentrale Leistungsversorgungseinheit (21, 31) eine elektrische Batterie aufweist und der Schaltkreis (20) einen elektrischen Schaltkreis enthält.

3. Ausrüstung nach Anspruch 1 oder 2, wobei die innere Box (25, 35) mit einer geschlossenen unteren Basis (25a, 35a) und einer geschlossenen Seitenwand (25b, 34b) versehen ist, und wobei die äußere Box (27, 37) mit einer geschlossenen oberen Basis (27a, 37a) und einer geschlossenen Seitenwand (27b, 37b) versehen ist, und wobei die innere Box (25, 35) eine offene obere Basis (25c, 35c) und die äußere Box (27, 37) eine offene untere Basis (27c, 37c) aufweisen.

4. Ausrüstung nach einem der Ansprüche 1 oder 2 oder 3, wobei die zentrale Leistungsversorgungseinheit (21) elektrisch durch einen elektrischen Schaltkreis von einer Batterie (31) gespeist ist, und wobei die Batterie in einem zweiten Gehäuse (23, 33) angeordnet ist, das ebenfalls eine wasserdichte innere Box (25, 35) aufweist, die an ihrer Oberseite offen ist und wiederum in einer wasserdichten äußeren Box (27, 37) angeordnet ist, die an ihrer Unterseite offen ist.

5. Ausrüstung nach Anspruch 1 oder 2 oder 3 oder 4, wobei die Boxen (25, 35, 27, 37) dem Rahmen (13) der Ausrüstung (11) zugeordnet sind und dazwischen eine Lücke (29, 39) definieren, die zumindest teilweise die innere Box (25, 35) umgibt und für den Durchgang von Rohren des elektrischen Schaltkreises (20) vorgesehen ist.

6. Ausrüstung nach Anspruch 4 oder 5, wobei die Lücke (29, 39), die zwischen den Boxen definiert ist, einen Doppelschwanenhals-Kanal (41) zum Durchgang des hydraulischen und/oder elektrischen Schaltkreises enthält, und wobei ein erster Schwanenhals (41a) des Kanals (41) um den offenen oberen Rand der Seitenwand (25b, 30b) der inneren Box (25, 35a) definiert ist und ein zweiter Schwanenhals (41b) des Kanals (41) um dem offenen unteren Rand der Seitenwand (27b, 37b) der äußeren Box (27, 37) definiert ist, wobei der erste Schwanenhals (41a) in die innere Box (25, 35) und der zweite Schwanenhals (41b) außerhalb der äußeren Box (27, 37) mündet.

7. Ausrüstung nach einem der vorstehenden Ansprüche, wobei das Gehäuse (23, 33), das die zentrale Leistungsversorgungseinheit (21) enthält, schwenkbar an dem Rahmen (13) der Ausrüstung angebracht ist, so dass es aus einer vorderen Konfiguration, in der das Gehäuse (23, 33) im Wesentlichen mit der Längsachse des Rahmens (13) ausgerichtet ist, in eine seitliche Konfiguration, in der das Gehäuse im Wesentlichen an eine Seite des Rahmens (13) angrenzt, übergehen kann.

8. Ausrüstung nach einem der vorstehenden Ansprüche, wobei das erste Gehäuse (23, 33) zusätzlich eine hydraulische Verteilungseinheit (45) enthält, die dem Hydraulikkreis (20) zugeordnet ist, um den Hydraulikmotoren (19) und anderen Benutzervorrichtungen der Ausrüstung (11), wie etwa Steuerbaugruppen (47) und Hebebaugruppen (51) der Aufhängungen (15), Leistung zuzuführen.

9. Ausrüstung nach einem der vorstehenden Ansprüche, wobei die innere Box (25, 35) an der äußeren Box (27, 37) angebracht ist, und wobei die äußere Box (27, 37) an den Rahmen (13), möglicherweise mit Zwischenlagerung von Scharnieren, angebracht ist oder sowohl die inneren als auch die äußeren Boxen (25, 35, 27, 37) an dem Rahmen (13) angebracht sind.

10. Ausrüstung nach einem der vorstehenden Ansprüche, wobei eine oder mehrere der Aufhängungen aufweisen:
- eine Aufhängungsbaugruppe (213), die dafür ausgelegt ist, die Ausdehnung der Aufhängung in der Höhe zu variieren, und ein Paar Teleskopaktoren (215, 217) aufweist, die sich jeweils um ihre entsprechenden parallelen Längsachsen erstrecken,
- eine einzelne rotierende Nabe (219), entweder freilaufend oder motorgetrieben, die starr in einer auskragenden Weise mit der Aufhängungsbaugruppe (213) verbunden und mit einem einzelnen Rad (221) versehen ist,
- einem Rotationszahnring (223), der an dem oberen Ende der Aufhängungsbaugruppe angebracht und dafür ausgelegt ist, zum Bewegen großer Objekte drehbar dem Rahmen (13) einer Ausrüstung zugeordnet zu sein.

11. Ausrüstung nach Anspruch 10, wobei die Rotationsachse (S1) des Rotationszahnrings (223) in dem Zentrum (C) der Grundfläche (I) liegt, die auf dem Boden (T), auf dem das Rad (221) sich fortbewegt, von dem Reifen (221b), mit dem das Rad (221) versehen ist, bleibt.

12. Ausrüstung nach Anspruch 10 oder 11, wobei die Rotationsachse des Rotationszahnrings (223) die Rotationsachse der Narbe (219) schneidet und näherungsweise parallel zu den länglichen Ausdehnungsachsen der Zylinder (215, 217) der Aufhängungsbaugruppe (213) ist.

13. Ausrüstung nach Anspruch 10, wobei die Aktoren der Aufhängungsbaugruppe (213) entsprechende Hydraulikzylinder aufweisen, wobei die Aufhängungsbaugruppe eine Platte (225) aufweist, die an den oberen Enden der Stiele der Hydraulikzylinder (215, 217) befestigt ist und sich in auskragender Weise parallel zu der Rotationsachse der Nabe (219) erstreckt und auf der selben Seite der Aufhängungsbaugruppe (213) angeordnet ist, auf der die Nabe angeordnet ist, und wobei der Zahnring (223) an der Platte (225) angebracht ist, eine Zahnstange vorgesehen ist, um Drehung des Zahnrings (223) um seine eigene Achse (S1) zu bewirken.

14. Ausrüstung nach Anspruch 10, wobei die Aktoren der Aufhängungsbaugruppe (213) entsprechende Hydraulikzylinder enthalten, und wobei die teleskopischen Hydraulikzylinder (215, 217) der Aufhängungsbaugruppe (213) eine Einlage (231) und einen Stiel (233), der von der Einlage ausfahrbar ist, aufweisen, und wobei die Nabe (219) in auskragender Weise einem Paar Einlagen der Hydraulikzylinder zugeordnet ist und der Zahnring am oberen Ende der Stiele befestigt ist, wobei die Einlagen (213) unter Betriebsbedingungen der Aufhängung in einer unteren Position angrenzend zu dem Rad (221) angeordnet sind und die Stiele (233) in einer oberen Position angrenzend zu dem Zahnring (223) angeordnet sind.

15. Ausrüstung nach einem der vorstehenden Ansprüche, wobei der Rahmen (13) Längsbalken (13a, 13b) aufweist und wobei eine anpassbare einziehbare Trägerbaugruppe (61) vorgesehen ist, die dazu dient, große Objekte, beispielsweise einen Bootsrumpf zu stützen und teilweise in einem entsprechenden Längsbalken (13a, 13b) in einem Schalensitz (13) angeordnet ist, der sowohl an seinen oberen als auch seien unteren Enden offen ist.----

## Revendications

1. Équipement amphibie (11) pour la manutention d'objets de grandes dimensions, notamment pour la manutention, la mise à l'eau et le halage de bateaux, comprenant un châssis (13), une pluralité de suspensions (15) pourvues chacune d'au moins une roue (17) et associées au châssis (13) pour la manutention de l'équipement (11), au moins une paire desdites suspensions (15) étant pourvue d'un moteur (19) correspondant, une unité d'alimentation centralisée (21,31) pour transférer auxdits moteurs (19), par l'intermédiaire d'un circuit (20), la puissance nécessaire à la manutention de l'équipement (11), **caractérisée en ce que** ladite unité d'alimentation centralisée (21,31) est logée dans un premier logement (23,33) comprenant un caisson interne étanche à l'eau (25,35) débouchant sur le dessus, qui est à son tour logé dans un caisson externe étanche à l'eau (27, 37) débouchant sur le dessous, et **en ce que** lesdits caissons (25,35,27,37) sont associés au châssis (13) de l'équipement (11) et définissent entre eux un espace (29,39) entourant au moins partiellement le caisson interne (25,35) et destinés au passage dudit circuit (20).

2. Équipement selon la revendication 1, dans lequel ledit moteur (19) comprend un moteur hydraulique, ladite unité d'alimentation centralisée (21,31) comprend une unité d'entraînement endothermique, électrique ou hybride associée à une pompe hydraulique (22), et ledit circuit comprend un circuit hydraulique, ou dans lequel ledit moteur (19) comprend un moteur électrique, ladite unité d'alimentation centralisée (21,31) comprend une batterie électrique et ledit circuit (20) comprend un circuit électrique.

3. Équipement selon la revendication 1 ou 2, dans lequel le caisson interne (25,35) est pourvu d'une base inférieure fermée (25a,35a) et d'une paroi latérale fermée (25b,35b), et dans lequel le caisson externe (27,37) est pourvu d'une base supérieure fermée (27a,37a) et d'une paroi latérale fermée (27b, 37b), et dans lequel le caisson interne (25,35) comprend une base supérieure débouchante (25c,35c) et le caisson externe (27,37) comprend une base inférieure débouchante (27c,37c).

4. Équipement selon la revendication 1 ou 2 ou 3, dans lequel ladite unité d'alimentation centralisée (21) est alimentée électriquement à travers un circuit électrique par une batterie (31), et dans lequel ladite batterie est logée dans un second logement (23,33), comprenant également un caisson interne étanche à l'eau (25,35) débouchant sur le dessus, qui est à son tour logé dans un caisson externe étanche à l'eau (27,37) débouchant sur le dessous.

5. Équipement selon la revendication 1 ou 2 ou 3 ou 4, dans lequel lesdits caissons (25,35,27,37) sont associés au châssis (13) de l'équipement (11) et définissent entre eux un espace (29,39) entourant au moins partiellement le caisson interne (25,35) et destinés au passage de tuyauterie dudit circuit électrique (20).

6. Équipement selon la revendication 4 ou 5, dans lequel ledit espace (29,39) défini entre les caissons loge un conduit (41) à double col de cygne destiné au passage dudit circuit hydraulique et/ou électrique, et dans lequel un premier col de cygne (41a) dudit conduit (41) est défini autour du bord supérieur débouchant de la paroi latérale (25b, 35b) du caisson interne (25,35) et un second col de cygne (41b) dudit conduit (41) est défini autour du bord inférieur débouchant de la paroi latérale (27b,37b) du caisson externe (27,37), moyennant quoi le premier col de cygne (41a) débouche dans le caisson interne (25,35) et le second col de cygne (4lb) débouche à l'extérieur du caisson externe (27,37).

7. Équipement selon l'une quelconque des revendications précédentes, dans lequel le logement (23,33) logeant l'unité d'alimentation centralisée (21) est articulé sur le châssis (13) de l'équipement de manière à pouvoir passer d'une configuration frontale, dans laquelle le caisson (23,33) est sensiblement aligné avec l'axe longitudinal du châssis (13), à une configuration latérale, dans laquelle le logement est sensiblement adjacent à un côté du châssis (13).

8. Équipement selon l'une quelconque des revendications précédentes, dans lequel le premier logement (23,33) loge en outre une unité de distribution hydraulique (45) associée au circuit hydraulique (20) pour distribuer la puissance aux moteurs hydrauliques (19) et aux autres dispositifs utilisateur de l'équipement (11), tels que des ensembles direction (47) et des ensembles levage (51) des suspensions (15).

9. Équipement selon l'une quelconque des revendications précédentes, dans lequel le caisson interne (25,35) est fixé au caisson externe (27,37), et dans lequel le caisson externe (27,37) est fixé au châssis (13), éventuellement avec interposition de charnières, ou bien les caissons interne et externe (25,35,27,37) sont tous deux fixés au châssis (13).

10. Équipement selon l'une quelconque des revendications précédentes, dans lequel une ou plusieurs desdites suspensions comprennent :
- un ensemble suspension (213) agencé pour faire varier l'extension en hauteur de la suspension et comprenant une paire d'actionneurs télescopiques (215,217) s'étendant chacun autour de leurs axes longitudinaux parallèles respectifs ;
- un moyeu rotatif unique (219), soit à vide, soit motorisé, rigidement associé en porte-à-faux audit ensemble suspension (213) et équipé d'une roue unique (221) ;
- une couronne dentée de rotation (223) assujettie à l'extrémité supérieure de l'ensemble suspension et destinée à être associée en rotation à un châssis (13) d'un équipement permettant de transférer des objets de grandes dimensions.

11. Équipement selon la revendication 10, dans lequel l'axe de rotation (S1) de la couronne dentée de rotation (223) tombe à l'intérieur du centre (C) de l'empreinte (I), laissée, sur le sol (T) sur lequel avance la roue (221), par le pneu (22 lb) dont est équipée ladite roue (221).

12. Équipement selon la revendication 10 ou 11, dans lequel l'axe de rotation de la couronne dentée de rotation (223) coupe l'axe de rotation du moyeu (219) et est approximativement parallèle aux axes d'extension longitudinale des vérins (215,217) de l'ensemble suspension (213).

13. Équipement selon la revendication 10, dans lequel les actionneurs de l'ensemble suspension (213) comprennent des vérins hydrauliques correspondants, l'ensemble suspension comprenant une plaque (225) assujettie aux extrémités supérieures des tiges des vérins hydrauliques (215, 217) et s'étendant en porte-à-faux parallèlement à l'axe de rotation du moyeu (219) et du même côté de l'ensemble suspension (213) sur lequel se trouve le moyeu, et dans lequel ladite couronne dentée (223) est fixée à ladite plaque (225), une crémaillère étant prévue pour entraîner une rotation de la couronne dentée (223) autour de son propre axe (S1).

14. Équipement selon la revendication 10, dans lequel les actionneurs de l'ensemble suspension (213) comprennent des vérins hydrauliques correspondants, et dans lequel les vérins hydrauliques télescopiques (215,217) de l'ensemble suspension (213) comprennent une chemise (231) et une tige (233) extensible depuis la chemise, et dans lequel le moyeu (219) est associé en porte-à-faux à la paire de chemises des vérins hydrauliques et la couronne dentée est assujettie aux extrémités supérieures des tiges, moyennant quoi, dans les conditions de fonctionnement de la suspension, les chemises (213) sont agencées dans une position basse adjacente à la roue (221) et les tiges (233) sont agencées dans une position haute adjacente à la couronne dentée (223).

15. Équipement selon l'une quelconque des revendications précédentes, dans lequel le châssis (13) comprend des poutres longitudinales (13a, 13b), et dans lequel il est prévu un ensemble support rétractable réglable (61) destiné à supporter l'objet de grande taille, par exemple une coque de bateau, et partiellement logé au sein d'une poutre longitudinale correspondante (13a, 13b) dans un siège bien conformé (63) débouchant à ses deux extrémités supérieure et inférieure.
